# EUROPÄISCHE PATENTSCHRIFT

(11) **EP 2 453 148 B1**
(45) Veröffentlichungstag und Bekanntmachung des Hinweises auf die Patenterteilung: **26.08.2015**
(21) Anmeldenummer: 11007596.7
(22) Anmeldetag: 19.09.2011
(51) Int. Cl.: F16H 59/04, F16C 1/26

(54) **Seilzuganbindung an einem Schaltgehäuse**
Cable winch connection on a switch housing
Système de traction par câble sur une boîte de vitesse

(30) Priorität: 12.11.2010 DE 102010051075
(43) Veröffentlichungstag der Anmeldung: 16.05.2012
(73) Patentinhaber: Dura Automotive Systems Einbeck GmbH, 37574 Einbeck (DE)
(72) Erfinder: Grude, Ingo, 37643 Negenborn (DE)
(74) Vertreter: Sobisch, Peter

(56) Entgegenhaltungen:
- FR-A1- 2 276 494
- FR-A1- 2 910 086
- GB-A- 2 230 323
- GB-A- 2 349 668
- JP-U- 59 024 522

## Beschreibung

Die Erfindung bezieht sich auf eine Seilzuganbindung entsprechend dem Oberbegriff des Anspruchs 1.

Die zur Übertragung von Schalt- und Wählbewegungen für ein Fahrzeuggetriebe benutzten, jeweils in Hüllen geführten Seilzüge enden auf der Seite eines einen Handschalthebel lagernden Schaltgehäuses in Hüllenendstücken, die in Öffnungen des Schaltgehäuses zu montieren sind, wobei die auf dieser Seite des Seilzuges benutzte Verbindungstechnik in vielen Fällen auch getriebeseitig benutzt werden kann. Es ist im Hause der Anmelderin bekannt, bei ungeteilt ausgestalteten Öffnungen des Schaltgehäuses Befestigungsteile zu benutzen, die auf die in die Öffnungen axial bis zu einem Anschlag eingeschobenen Hüllenendstücke radial aufgesteckt werden, in der Aufsteckposition elastisch verrastet sind und mit der Öffnungsberandung oder in sonstiger Weise mit dem Schaltgehäuse zwecks Darstellung einer axialen Auszugssicherung zusammenwirken. Von Nachteil bei dieser Verbindungstechnik ist jedoch die Notwendigkeit der Benutzung dieser separaten Befestigungsteile, die teilweise unter schwierigen Bedingungen zu montieren sind.

Aus dem Dokument GB 2 349 668 A ist eine Seilzuganbindung für eine Halterung bekannt, die mit einer Öffnung zur Aufnahme sowie zur halterungsseitigen Fixierung einer einen Seilzug führenden, ein Hüllenendstück tragenden Hülle versehen ist, wobei das Hüllenendstück in die Öffnung eirtsteckbar ist und mittels einer auf deren halterungsseitiges Ende aufschraubbaren, durch eine Feder gesicherten Mutter in der Öffnung festgelegt ist. Diese Anbindung gestaltet sich sowohl in ihrem Aufbau als auch in ihrer montagemäßigen Handhabung vergleichweise kompliziert.

Eine andere, ebenfalls im Hause der Anmelderin bekannte Verbindungstechnik, die bei solchen Schaltgehäusen zum Einsatz kommt, deren, zur Aufnahme von Hüllenendstücken bestimmte Öffnungen geteilt ausgebildet sind, besteht darin, die Hüllenendstücke mit Schnapphaken auszurüsten, die mit der Öffnungsberandung verrastbar sind. Dies bedingt ebenfalls einen vergleichweise komplizierten Aufbau des Hüllenendstücks und gleichermaßen des Schaltgehäuses.

Es ist vor diesem Hintergrund die Aufgabe der Erfindung, eine gattungsgemäße Seilzuganbindung mit Hinblick auf einen einfacheren konstruktiven Aufbau, sowie eine einfachere und raschere Montage hin auszugestalten, und zwar unter gleichzeitiger Bereitstellung einer Dichtfunktion zum Schaltgehäuse. Gelöst ist diese Aufgabe bei ein einer solchen Seilzuganbindung durch die Merkmale des Kennzeichnungsteils des Anspruchs 1.

Die Montageposition des Hüllenendstücks eines jeden Seilzugs ist in der Öffnung des Schaltgehäuses ohne Zusatzbauteile und ohne die Notwendigkeit eines Werkzeugs ausschließlich mit konstruktiven Mitteln, somit aufgrund von Eigenschaften der Öffnung in Verbindung mit solchen des einen Teil des Hüllenendstücks bildenden Profilabschnitts herbeiführbar. Hierbei kann gleichzeitig auch eine Dichtfunktion zum Schaltgehäuse bereit gestellt werden. Der Montagezustand ist somit im Vergleich zu dem eingangs vorgestellten Stand der Technik einfacher und schneller darstellbar. Der Profilabschnitt bildet in Verbindung mit der an diesen umfangsseitig angepassten Berandung der Öffnung des Schaltgehäuses eine bajonnettartige Sicherung der Montageposition, welche durch ein Einschieben des Profilabschnitts in die Öffnung bis zu einem axial wirksamen Anschlag und ein anschließendes Eindrehen gekennzeichnet ist, wobei die Kontur der Berandung in ein Nutsegment von dessen offener Seite her eingeführt wird, und zwar bis eine Anlage an der Anlagefläche des Nutsegments erreicht ist. Die Anlagefläche bildet somit eine Drehwinkelbegrenzung für die Drehung des Profilabschnitts, welche dem Nutzer signalisiert, dass die korrekte Montageposition erreicht ist. Eine axiale Fixierung der Montageposition ist somit unmittelbar über die Berandung der Öffnung des Schaltgehäuses gegeben, die im Eingriff mit dem sich in Umfangsrichtung der Hülle des Seilzuges erstreckenden Nutsegment steht. Diese Verbindungstechnik ist vorzugsweise für eine Anwendung bei umfangsseitig geschlossenen Öffnungen eines Schaltgehäuses konzipiert. Eine Anwendung bei geteilt ausgebildeten Öffnungen kommt jedoch ebenfalls in Betracht.

Um eine gleichförmige Fixierung entlang des Umfangs des Profilabschnitts zu erreichen, sind entsprechend den Merkmalen des Anspruchs 2 zwei oder mehr Nutsegmente in gleichförmiger Umfangsverteilung vorgesehen, die in gleicher Weise mit der entsprechend ausgebildeten Umfangsberandung der Öffnung des Schaltgehäuses zusammenwirken. Es ist das Umfangsprofil der Öffnung somit wiederum derart beschaffen, dass in einer bestimmten Drehwinkelstellung des Profilabschnitts relativ zu dem Umfangsprofil der Öffnung der Profilabschnitt axial in eine Anschlagposition in die Öffnung eingeschoben und anschließend um seine Achse bis eine Position gedreht werden kann, in der die entsprechenden Umfangsabschnitte der Berandung der Öffnung an den Anschlagflächen der Nutsegmente anliegen.

Dies kann entsprechend den Merkmalen des Anspruchs 3 besonders einfach durch formschlüssig wirksame, auf der, die Öffnung aufweisenden Wandung sowie dem Profilabschnitt wirksame Elemente dargestellt werden, die beim Eindrehen in die Montageposition selbsttätig wirksam werden.

Man erkennt, dass mit der erfindungsgemäßen Seilzuganbindung ein besonders einfach handhabbares und zuverlässiges Mittel zur Verfügung gestellt wird, um die Hüllenendstücke der beiden Seilzüge eines Schaltgehäuses in den genannten Öffnungen zu fixieren. Die gleiche Technik kann auch getriebeseitig eingesetzt werden.

Die Erfindung wird im Folgenden unter Bezugnahme auf das in den Zeichnungen dargestellte Ausführungsbeispiel näher beschrieben werden. Es zeigen:
- Fig. 1: eine perspektivische Darstellung einer dem Stand der Technik entsprechenden Ausführungsform einer Seilzuganbindung in unterseitiger seitlicher Ansicht;
- Fig. 2: eine perspektivische Darstellung einer erfindungsgemäßen Ausführungsform einer Seilzuganbindung in unterseitiger stirnseitiger Ansicht vor der Montage;
- Fig. 3: eine perspektivische Darstellung der Seilzuganbindung gemäß Fig. 2 in unterseitiger Ansicht vor der Montage ;
- Fig. 4: eine perspektivische Darstellung der Seilzuganbindung gemäß Fig. 2 in oberseitiger Ansicht im Montagezustand;
- Fig. 5: eine perspektivische Darstellung der Seilzuganbindung gemäß Fig. 2 in unterseitiger Ansicht im Montagezustand.

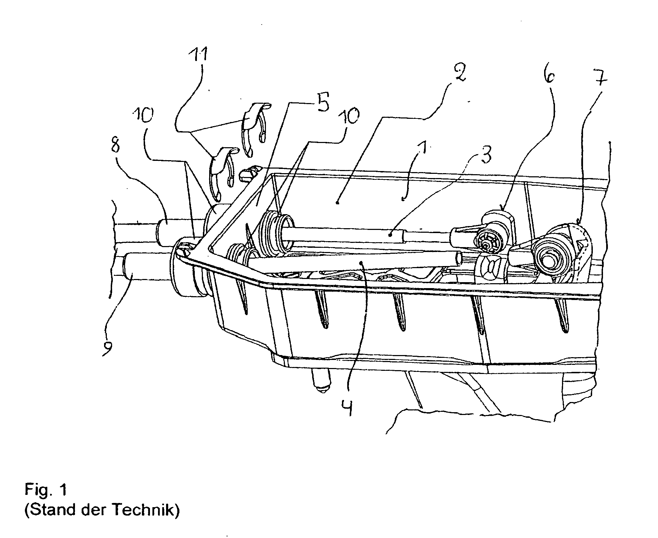

Unter Bezugnahme auf Fig. 1 wird zunächst eine bekannte Ausführungsform einer Seilzuganbindung beschrieben werden.

Mit 1 ist in Fig. 1 die Unterseite eines Schaltgehäuses 2 eines Kraftfahrzeugs bezeichnet, in welchem in üblicher Weise ein Handschalthebel um zwei zueinander senkrechte, jeweils zur Übertragung von Schalt- oder Wählbewegungen bestimmte Achsen schwenkbar gelagert ist.

In das Schaltgehäuse 2 hinein sind ein zur Übertragung von Schaltbewegungen bestimmter Seilzug 3 und ein zur Übertragung von Wählbewegungen bestimmter Seilzug 4 geführt, und zwar durch Öffnungen in dessen in Fig. 1 linksseitiger Stirnseite 5 hindurch. Die Seilzüge 3, 4 stehen an ihren einen Enden innerhalb des Schaltgehäuses 2 an den Stellen 6, 7 über zwischengeordnete, jeweils den Schaltoder den Wählbewegungen zugeordneten Übertragungselementen mit dem Handschalthebel in Verbindung. Die dem Schaltgehäuse abgekehrten Enden der Seilzüge stehen mit den entsprechenden Eingangsorganen des zu schaltenden Getriebes in Verbindung.

Die Seilzüge 3, 4 sind jeweils in Hüllen 8, 9 aufgenommen, deren untereinander gleich beschaffene Hüllenendstücke 10 in den genannten Öffnungen der Stirnwand 5 axial fixiert sind.

Zum Zweck der Fixierung ist die Oberflächenprofilierung der Hüllenendstücke 10 mit der Maßgabe eingerichtet, dass deren Einschubtiefe in die Öffnungen begrenzt ist, wobei diese Einschubposition durch ein Befestigungselement 11, welches radial über das jeweilige Hüllenendstück 10 schiebbar ist und mit der Brandung der Öffnung formschlüssig zusammenwirkt, gesichert ist. Zur Montage des Hüllenendstücks 10 muss dieses somit zunächst in die genannte Öffnung axial bis zu einem Anschlag eingeschoben werden, wobei anschließend das Befestigungselement 11 aufzuschieben ist.

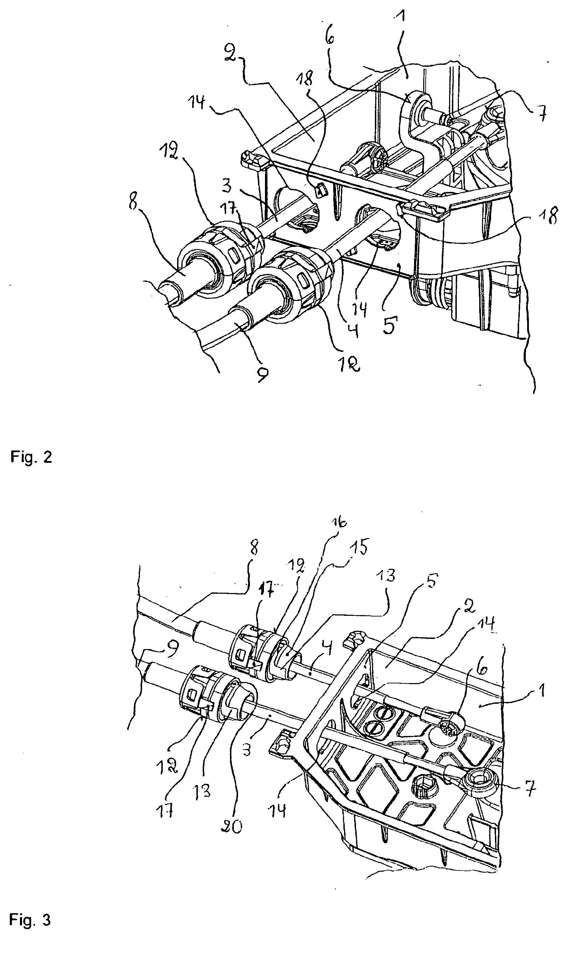

Zur Beschreibung einer erfindungsgemäßen Ausführungsform einer Seilzuganbindung wird im Folgenden auf die Figuren 2 bis 5 Bezug genommen, in denen Funktionselemente, die mit denjenigen der Fig. 1 übereinstimmen, entsprechend beziffert sind.

Die Hüllen 8, 9 der beiden Seilzüge 3, 4 sind mit Hüllendstücken 12 ausgerüstet, deren jeweiliges, dem Schaltgehäuse 2 zugekehrtes Ende mit einem bajonettartigen Profilabschnitt 13 versehen ist, der zum Zusammenwirken mit einer, in Umfangsrichtung entsprechend ausgebildeten Öffnung 14 der Stirnseite 5 eingerichtet ist. Zur Montage ist das Hüllenendstück 12 zunächst axial in die Öffnung 14 einzuführen und kann durch eine anschließende Umdrehung um einen definierten Winkel axial formschlüssig in dieser Montageposition gesichert werden.

Der Profilabschnitt 13 kann zu diesem Zweck beispielsweise mit zwei einander diametral gegenüberliegenden Ringsegmenten 15 versehen sein, auf deren, dem Schaltgehäuse 2 abgekehrter Seite jeweils ein Nutsegment 16 gebildet ist, wobei das Umfangsprofil der Öffnungen 14 komplementär zu dem Umfangsprofil des, die Ringsegmente 15 tragenden Endes des Hüllenendstücks 12 mit der Maßgabe eingerichtet ist, dass ein Wandungsabschnitt der Stirnseite 5 durch Drehung des Hüllenendstücks 12 um einen Winkel, der in etwa der Umfangserstreckung des Ringsegments 15 entspricht, in einen axial wirksamen Eingriff mit dem Nutsegment 16 gelangt, somit eine Auszugsicherung bildend.

Jedes Nutsegment 16 endet in Umfangsrichtung mit einer Anschlagfläche 20 und es sind die Anschlagflächen 20 der beiden Nutsegmente 16 mit der Maßgabe eingerichtet, dass ein Drehen des Hüllenendstücks 12 bis in die die Montageposition anzeigende Anlageposition möglich ist, in der entsprechende, zu dem Umfangsprofil des Hüllenendstücks 12 komplementär ausgebildete Abschnitte der Berandung der Öffnung 14 an diesen Anschlagflächen 20 anliegen.

An dem Hüllenendstück 12 sind ferner formschlüssig wirksame Sicherungselemente 17 angeformt, die beispielsweise zum elastischen Verrasten mit aus der Wandung der Stirnseite 5 herausragenden Riegelabschnitten 18 bestimmt sind. In der Montageposition der Hüllenendstücke 12 werden die Riegelabschnitte 18 von den Sicherungselementen 17 hintergriffen, so dass eine unbeabsichtigte Drehung der Hüllenendstücke 12 in einer Gegenrichtung zu der Richtung, in der sie in der Öffnung 14 zwecks Herbeiführung des Eingriffszustands zwischen den Nutsegmenten 16 und der Wandung der Stirnseite 5 eingedreht worden sind, zuverlässig unterbunden ist. Ein unbeabsichtigtes Lösen des Hüllenendstücks 12 von dem Schaltgehäuse 2 ist somit verhindert.

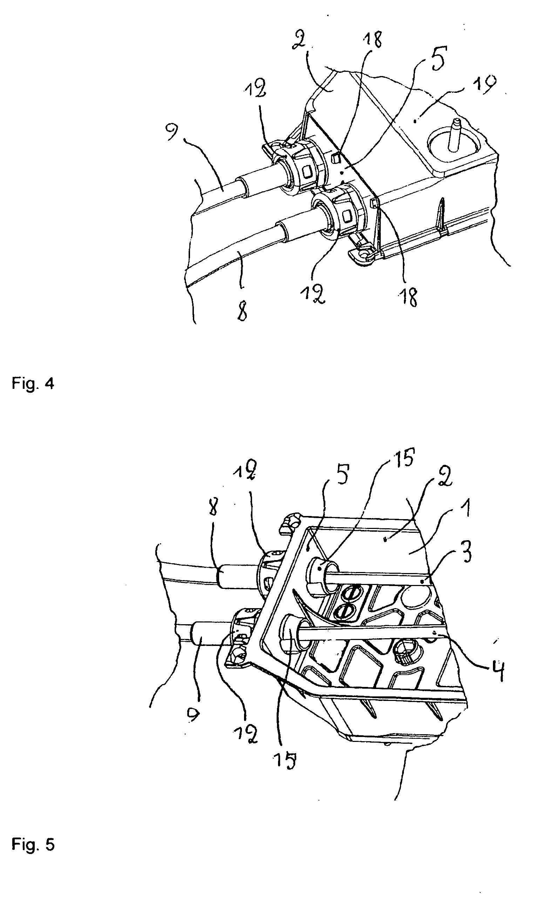

Wie die Fig. 4, welche die Oberseite 19 des Schaltgehäuses 2 zeigt, sind die Riegelabschnitte 18 und somit auch die Sicherungselemente 17 in gleicher Weise wie die Nutsegmente 16 in einer einander diametral gegenüberliegenden Position, somit paarweise angeordnet, so dass eine zuverlässige Sicherung der Montageposition gegeben ist.

Anstelle von zwei Nutsegmenten 16 können auch mehr als zwei in gleichmäßiger Umfangsverteilung positionierte Nutsegmente vorgesehen sein, die in der Montageposition mit Umfangsabschnitten der Brandung der Öffnung 14 zusammenwirken.

### Bezugszeichenliste:

- 1.: Unterseite
- 2.: Schaltgehäuse
- 3.: Seilzug
- 4.: Seilzug
- 5.: Stirnseite
- 6.: Stelle
- 7.: Stelle
- 8.: Hülle
- 9.: Hülle
- 10.: Hüllenendstück
- 11.: Befestigungselement
- 12.: Hüllenendstück
- 13.: Profilabschnitt
- 14.: Öffnung
- 15.: Ringsegment
- 16.: Nutsegment
- 17.: Sicherungselement
- 18.: Riegelabschnitt
- 19.: Oberseite
- 20.: Anschlagfläche

## Patentansprüche

1. Seilzuganbindung mit zumindest einem, in einer Hülle (8, 9) geführten Seilzug (3, 4) eines zur Übertragung von Wähl- und / oder Schaltbewegungen auf ein Fahrzeuggetriebe bestimmten Schaltgehäuses (2), mit Öffnungen (14), die in dessen zumindest einer Seite angeordnet und zur Aufnahme sowie zur axialen Fixierung eines das schaltgehäuseseitige Ende der Hülle (8, 9) bildenden Hüllenendstücks (12) eingerichtet sind, wobei das Hüllenendstück (12) auf seiner, dem Schaltgehäuse (2) zugekehrten Seite einen zum axial begrenzten Einstecken in eine zur Aufnahme des Hüllenendstücks (12) bestimmte Öffnung (14) bestimmten Profilabschnitt (13) aufweist, wobei die genannte Öffnung (14) und der Profilabschnitt (13) mit der Maßgabe aneinander angepasst sind, dass mit konstruktiven Mitteln eine axiale Fixierung des Hüllenendstücks (12) in der in die Öffnung (14) eingesetzten Position darstellbar ist, **dadurch gekennzeichnet, dass** der Profilabschnitt (13) mit wenigstens einem, auf seiner, dem freien axialen Ende abgekehrten Seite ein sich in Umfangsrichtung erstreckendes, auf seiner einen Seite offenes und auf seiner anderen Seite eine in Umfangsrichtung wirksame Anschlagfläche (20) aufweisendes Nutelement (16) begrenzenden Ringelement (15) versehen ist und dass die Umfangskontur der Öffnung (14) in Verbindung mit der Bemessung des Nutelements (16) mit der Maßgabe angelegt sind, dass durch Drehung des in die Öffnung (14) axial eingeschobenen Profilabschnitts (13) die Berandung der Öffnung (14) in eine Anlage an der Anlagefläche (20) des Nutelements (16) bringbar ist, hierbei die axiale Fixierung des Hüllenendstücks (12) in der Öffnung (14) darstellend.

2. Seilzuganbindung nach Anspruch 1, **dadurch gekennzeichnet, dass** wenigstens zwei Ringelemente (15) und dementsprechend zwei Nutelemente (16) in gleichförmiger Umfangsverteilung auf dem Profilabschnitt (13) vorgesehen sind, und dass die Umfangskontur der zur Aufnahme des Hüllenendstücks (12) bestimmten Öffnung (14) mit Hinblick auf die Darstellung einer axial wirksamen Eingriffsposition für zwei Nutelemente (16) eingerichtet ist.

3. Seilzuganbindung nach Anspruch 1 oder 2, **gekennzeichnet durch** auf der Außen- oder der Innenseite des Schaltgehäuses (2) angeordnete Regelabschnitte (18), die in der Montageposition des Hüllenendstücks (12) mit auf dem Profilabschnitt (13) befindlichen Sicherungselementen (17) eine formschlüssige Sicherung der Montageposition bilden.

## Claims

1. Cable pull connection comprising at least one cable pull (3, 4), which is guided in a casing (8, 9), of a gearshift housing (2) which is intended to transmit selection and/or shifting movements to a vehicle transmission, comprising openings (14) which are arranged in at least one side thereof and are configured for receiving and for axially fixing a casing end piece (12) which forms the gearshift housing-side end of the casing (8, 9), wherein the casing end piece (12) comprises on its side facing towards the gearshift housing (2) a profile section (13) which is intended for axially limited insertion into an opening (14) intended to receive the casing end piece (12), wherein said opening (14) and the profile section (13) are adapted to one another with the proviso that axial fixing of the casing end piece (12) in the position inserted into the opening (14) can be formed by structural means, **characterised in that** the profile section (13) is provided with at least one ring element (15) which defines on its side facing away from the free axial end a groove element (16) which extends in the circumferential direction, is open on one side thereof and comprises on its other side a stop surface (20) which is effective in the circumferential direction, and that the circumferential contour of the opening (14) in conjunction with the dimensioning of the groove element (16) are arranged with the proviso that by rotating the profile section (13), which is axially inserted into the opening (14), the boundary of the opening (14) can be brought into abutment against the bearing surface (20) of the groove element (16), in this case forming the axial fixing of the casing end piece (12) in the opening (14).

2. Cable pull connection as claimed in claim 1, characterised at least two ring elements (15) and accordingly two groove elements (16) are provided in uniform circumferential distribution on the profile section (13), and that the circumferential contour of the opening (14) intended to receive the casing end piece (12) is configured with regard to forming an axially effective engagement position for two groove elements (16).

3. Cable pull connection as claimed in claim 1 or 2, **characterised by** control portions (18) which are arranged on the outer side or the inner side of the gearshift housing (2) and which in the mounting position of the casing end piece (12) serve to lock the mounting position in a positive manner with locking elements (17) located on the profile section (13).

## Revendications

1. Système de traction par câble d'un boîtier de changement de vitesses (2), comprenant au moins un câble de traction (3, 4) guidé dans une gaine (8, 9), destiné à la transmission de mouvements de sélection et/ou de changement de vitesses sur une boîte de vitesses de véhicule, comprenant des ouvertures (14) qui sont disposées dans au moins un côté dudit boîtier de changement de vitesses et qui sont adaptées pour la réception et la fixation axiale d'une pièce d'extrémité de gaine (12) formant l'extrémité côté boîtier de changement de vitesses de la gaine. (8, 9), sachant que la pièce d'extrémité de gaine (12) présente, sur son côté tourné vers le boîtier de changement de vitesses (2), une section profilée (13) destinée à être enfichée de manière limitée axialement dans une ouverture (14) destinée à la réception de la pièce d'extrémité de gaine (12), sachant que l'ouverture (14) évoquée et la section profilée (13) sont adaptées l'une à l'autre à condition qu'une fixation axiale de la pièce d'extrémité de gaine (12) puisse être réalisée dans la position d'insertion dans l'ouverture (14) à l'aide de moyens de construction, **caractérisé en ce que** la section profilée (13) est pourvue d'au moins un élément annulaire (15) délimitant, sur son côté opposé à l'extrémité axiale libre, un élément formant rainure (16) s'étendant dans la direction périphérique, ouvert sur l'un de ses côtés et présentant sur son autre côté une surface de butée (20) active dans la direction périphérique, et **en ce que** le contour périphérique de l'ouverture (14) est positionné en lien avec la conception de l'élément formant rainure (16) à la condition que, du fait de la rotation de la section profilée (13) insérée par glissement de manière axiale dans l'ouverture (14), le rebord de l'ouverture (14) puisse être amené en appui au niveau de la surface d'appui (20) de l'élément formant rainure (16), dans le cas présent constituant la fixation axiale de la pièce d'extrémité de gaine (12) dans l'ouverture (14).

2. Système de traction par câble selon la revendication 1, **caractérisé en ce qu'**au moins deux éléments annulaires (15) et, de manière correspondante, deux éléments formant rainure (16) sont prévus selon une répartition périphérique homogène sur la section profilée (13), et **en ce que** le contour périphérique de l'ouverture (14) destinée à la réception de la pièce d'extrémité de gaine (12) est réalisé pour deux éléments formant rainure (16) pour constituer une position d'engrènement active de manière axiale.

3. Système de traction par câble selon la revendication 1 ou 2, **caractérisé par** des sections de réglage (18) disposées sur le côté extérieur ou sur le côté intérieur du boîtier de changement de vitesses (2), lesquelles forment dans la position de montage de la pièce d'extrémité de gaine (12), avec des éléments de blocage (17) se trouvant sur la section profilée (13), un blocage par complémentarité de forme de la position de montage.
